# EUROPEAN PATENT APPLICATION

(11) **EP 4 592 860 A1**
(43) Date of publication of application: **30.07.2025**
(21) Application number: 25151328.9
(22) Date of filing: 10.01.2025
(51) Int. Cl.: G06F 15/78

(54) **CENTRAL COMPUTING UNIT, FUNCTION EXECUTION METHOD, DEVICE, STORAGE MEDIUM, AND VEHICLE**

(30) Priority: 16.01.2024 CN 202410068307
(71) Applicant: BYD Company Limited, Shenzhen, Guangdong 518118 (CN)
(72) Inventor: ZHONG, Yilin, Shenzhen, 518118 (CN); WANG, Wei, Shenzhen, 518118 (CN); LI, Jilian, Shenzhen, 518118 (CN); MO, Heng, Shenzhen, 518118 (CN); GUO, Rui, Shenzhen, 518118 (CN)
(74) Representative: Mathys & Squire

(57) **Abstract**

Embodiments of the present disclosure provide a central computing unit, a function execution method, a device, a storage medium, and a vehicle. The central computing unit is used in the vehicle, and the central computing unit includes a number of chips. Some or all of the number of chips are configured to acquire data information of a first functional domain of a number of functional domains of the vehicle and process the data information to execute a function of the first functional domain, the first functional domain being any functional domain in the number of functional domains.

## Description

### FIELD

The present disclosure relates to the field of vehicle technologies, and specifically, to a central computing unit, a function execution method, a device, a storage medium, and a vehicle.

### BACKGROUND

With the development of vehicle electrification, the degree of intelligence has increased. To adapt to the development of the vehicle electrification, a distributed architecture is used to respond to increasing demands. Specifically, vehicles are divided into a number of functional domains based on their functions, and different functional domains communicate through the distributed architecture to enable intelligent control of the vehicles.

However, as functions of electrical appliances continue to increase, the number of domain controllers of an entire vehicle also gradually increases, and difficulty in arranging the controllers increases, resulting in higher costs of the electrical appliances of the vehicle.

### SUMMARY

Embodiments of the present disclosure provide a central computing unit, a function execution method, a device, a storage medium, and a vehicle. A number of chips are arranged in the central computing unit, a number of functional domains of the vehicle are fused across domains to the central computing unit for execution, and there is no need to arrange a domain controller for each functional domain to implement functions of the number of functional domains, thereby reducing costs of electronic devices of the vehicle.

According to a first aspect, an embodiment of the present disclosure provides a central computing unit. The central computing unit is used in a vehicle, and the central computing unit includes a number of chips.

Some or all of the number of chips are configured to acquire data information of a first functional domain of a number of functional domains of the vehicle, and process the data information to execute a function of the first functional domain. The first functional domain is any functional domain in the number of functional domains.

According to a second aspect, an embodiment of the present disclosure provides a function execution method. The method is applicable to a central computing unit of a vehicle, and the central computing unit includes a number of chips. The method includes:
some or all of the number of chips acquire data information of a first functional domain of a number of functional domains of the vehicle, and process the data information to execute a function of the first functional domain. The first functional domain is any functional domain in the number of functional domains.

In an implementation of the present disclosure, the number of functional domains are all functional domains of the vehicle.

In an implementation of the present disclosure, the number of chips have different structures.

In an implementation of the present disclosure, the central computing unit communicates with other hardware on the vehicle through a number of types of buses.

In an implementation of the present disclosure, the number of types of buses include one or more of the following: an ether ETH bus, a general purpose input/output (GPIO) bus, a local interconnect network (LIN) bus, and a controller area network (CAN) bus.

In an implementation of the present disclosure, when the other hardware is a zone controller of the vehicle, the central computing unit communicates, through the ETH bus, with the zone controller of the vehicle through an Ethernet ring network; and when the other hardware is an electronic control unit of the vehicle, the central computing unit communicates with the electronic control unit through the GPIO bus, the local interconnect network (LIN) bus, or the controller area network (CAN) bus.

In an implementation of the present disclosure, status detection is performed between the number of chips through a preset interface, where the preset interface includes an integrated circuit bus (I2C) interface and/or an input/output (IO) interface.

In an implementation of the present disclosure, the number of chips include a microcontroller unit (MCU), a system on chip (SOC), and a field programmable gate array (FPGA).

In an implementation of the present disclosure, the MCU communicates with the SOC through an ether ETH bus; the SOC communicates with the FPGA through a peripheral component interconnect express (PCIE) bus; and the MCU communicates with the FPGA through a serial peripheral interface (SPI) bus.

In an implementation of the present disclosure, the number of functional domains include at least one of the following: a vehicle body electronic domain, a central gateway domain, a chassis domain, an interactive display domain, a driving assistance domain, or a telematics box (T-BOX) domain.

In an implementation of the present disclosure, a function of the vehicle body electronic domain includes at least one of the following: control of a light system, a window system, an air conditioning system, a seat system, or an anti-theft system; a function of the central gateway domain includes at least one of the following: communication, fault diagnosis, over-the-air (OTA) management, or network management are performed through various types of buses; a function of the chassis domain includes at least one of the following: control of a brake system, a steering system, a suspension system, or a vehicle control unit (VCU) system; a function of the interactive display domain includes at least one of the following: display of an AR-HUD, a pixel light, an internal camera monitor system, an external camera monitor system, or a night vision system; a function of the driving assistance domain includes at least one of the following: driving assistance or automatic parking; and a function of the T-BOX domain includes at least one of the following: data collection, vehicle diagnosis, or scenario customization.

In an implementation of the present disclosure, the function of the vehicle body electronic domain, the function of the central gateway domain, and the function of the chassis domain are executed by the MCU; the function of the interactive display domain is jointly executed by the SOC and the FPGA; and the function of the driving assistance domain and the function of the T-BOX domain are executed by the SOC.

In an implementation of the present disclosure, the MCU communicates with other hardware of the vehicle through a number of types of buses, to execute the function of the vehicle body electronic domain and the function of the chassis domain; and the SOC and the FPGA communicate with cameras through a SERDES bus, to acquire image data from the cameras, and process and/or store the image data, to execute the function of the driving assistance domain, the function of the interactive display domain, and the function of the T-BOX domain.

According a third aspect, an embodiment of the present disclosure provides an electronic device, including: a processor and a memory, the processor being connected to the memory, the memory being configured to store a computer program, and the processor being configured to execute the computer program stored in the memory, to cause the electronic device to perform the method described in the second aspect.

According to a fourth aspect, an embodiment of the present disclosure provides a computer-readable storage medium. The computer-readable storage medium stores a computer program, and the computer program causes a computer to perform the method described in the second aspect.

According to a fifth aspect, an embodiment of the present disclosure provides a computer program product. The computer program product includes a non-transitory computer-readable storage medium storing a computer program, and the computer program is operable to cause a computer to perform the method described in the second aspect.

According to a sixth aspect, an embodiment of the present disclosure provides a vehicle, and includes the central computing unit described in any one of the foregoing aspects.

The embodiments of the present disclosure achieve the following beneficial effects:

It can be understood that, in the embodiments of the present disclosure, through interaction between the number of chips of the central computing unit, a function of any functional domain in the number of functional domains of the vehicle may be executed by using the number of chips. That is, the number of functional domains of the vehicle are fused to the central computing unit for execution. In this way, the central computing unit may acquire data information under the number of functional domains, thereby enabling more intelligent control of the vehicle. In addition, after the number of functional domains are fused, the function of the number of functional domains are uniformly executed by the central computing unit, and there is no need to arrange a domain controller for each functional domain separately to implement the function of each functional domain, thereby reducing costs of electronic devices of the vehicle.

### BRIEF DESCRIPTION OF THE DRAWINGS

To describe the technical solutions in the embodiments of the present disclosure more clearly, the following briefly introduces the accompanying drawings required for describing the embodiments. Apparently, the accompanying drawings in the following description show only some embodiments of the present disclosure, and a person of ordinary skill in the art may still derive other accompanying drawings from the accompanying drawings without creative efforts.
FIG. 1 is a schematic structural diagram of a central computing unit according to an embodiment of the present disclosure;
FIG. 2 is a schematic diagram of an internal communication manner of a chip in another central computing unit according to an embodiment of the present disclosure;
FIG. 3 is a schematic diagram of a communication manner between a chip in a central computing unit and other hardware according to an embodiment of the present disclosure;
FIG. 4 is a schematic diagram of a functional domain of a vehicle and a function of the functional domain according to an embodiment of the present disclosure;
FIG. 5 is a schematic diagram of executing a function of each functional domain according to an embodiment of the present disclosure;
FIG. 6 is a schematic diagram of an underlying structure of each chip according to an embodiment of the present disclosure;
FIG. 7 is a schematic flowchart of a function execution method according to an embodiment of the present disclosure; and
FIG. 8 is a schematic structural diagram of an electronic device according to an embodiment of the present disclosure.

### DETAILED DESCRIPTION

The following clearly and completely describes the technical solutions in the embodiments of the present disclosure with reference to the accompanying drawings in the embodiments of the present disclosure. Apparently, the described embodiments are some of the embodiments of the present disclosure rather than all of the embodiments. All other embodiments obtained by a person of ordinary skill in the art based on the embodiments of the present disclosure without creative efforts shall fall within the protection scope of the present disclosure.

In the specification, claims, and accompanying drawings of the present disclosure, the terms "first", "second", "third", "fourth", or the like are intended to distinguish between different objects and are not used to describe a particular order. In addition, terms "comprise", "include", and any variations thereof are intended to indicate non-exclusive inclusion. For example, a process, method, system, product, or device that includes a series of steps or units is not limited to the listed steps or units; and instead, further optionally includes a step or unit that is not listed, or further optionally includes another step or unit that is intrinsic to the process, method, product, or device.

"Embodiment" mentioned in this specification means that particular features, results, or characteristics described with reference to the embodiment may be included in at least one embodiment of the present disclosure. The term appearing at different positions of the specification may not refer to the same embodiment or an independent or alternative embodiment that is mutually exclusive with another embodiment. A person skilled in the art explicitly or implicitly understands that the embodiments described in this specification may be combined with other embodiments.

To facilitate understanding of the technical solutions of the present disclosure, features of several chips involved in the present disclosure are first described.

Microcontroller Unit (MCU): A MCU chip usually only includes a basic processor core and a necessary peripheral interface, and has a limited processing capability. However, the MCU generally has real-time performance, can respond to input and output quickly, and is suitable for an application with a high requirement on timeliness.

System On Chip (SOC): The SOC integrates a large number of functional modules, such as a processor, a memory, a graphics processor, a communication interface, and the like, to support the storage of a large number of data, and can meet requirements of more complex applications. The SOC is equipped with a powerful processor, and can process a complex algorithm and large-scale data, for example, can perform image processing and an AI operation.

Field programmable gate array (FPGA): The FPGA is programmable, and can implement extension of different logical function interfaces according to requirements, so that images can be quickly displayed.

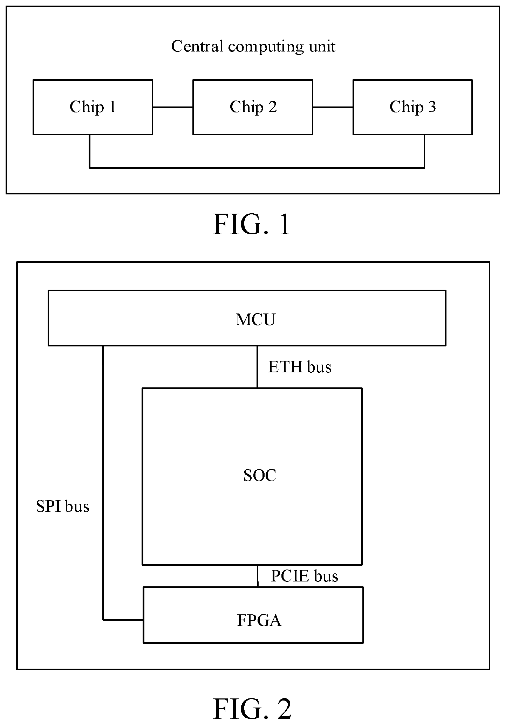

Referring to FIG. 1, FIG. 1 is a schematic structural diagram of a central computing unit according to an embodiment of the present disclosure. As shown in FIG. 1, the central computing unit includes a number of chips. The present disclosure mainly uses a chip 1, a chip 2, and a chip 3 as an example for description. The central computing unit is located on a vehicle, and is configured to execute a function of any functional domain of the vehicle.

It should be noted that, the foregoing number of chips have different structures, and chips with different structures achieve different functions. Therefore, when functions of different functional domains of the vehicle are executed, chips in the central computing unit that participate in executing the functions may also be different. For example, during execution of functions of some functional domains, only some of the number of chips or all of the number of chips may need to participate. When the number of chips participate, the number of chips coordinate with each other, to execute the function of the functional domain. For example, when a function of a vehicle body electronic domain is executed, the function is mainly to control a light system, a window system, an air conditioning system, and the like. These systems mainly communicate based on a general purpose input/output (GPIO) protocol. Therefore, the function of the vehicle body electronic domain may be executed by chips having a large number of GPIO interfaces in the central computing unit.

As shown in FIG. 1, for a function of a first functional domain in the number of functional domains of the vehicle, when the central computing unit implements the function of the first functional domain, data information of the first functional domain is acquired through some or all of the number of chips, that is, chips configured to execute the function in the number of chips, and the data information is processed to execute the function of the first functional domain. The first functional domain is any functional domain in the number of functional domains.

It can be understood that, in the embodiments of the present disclosure, through interaction between the number of chips of the central computing unit, a function of any functional domain in the number of functional domains of the vehicle may be executed by the number of chips, that is, the number of functional domains of the vehicle are fused across domains, thereby reducing costs of electronic devices of the vehicle. In addition, after the number of functional domains are fused across domains to one central computing unit for execution, cross-domain communication between the number of functional domains is changed into inter-board communication, thereby improving communication efficiency between the functional domains. In addition, the number of functional domains are fused across domains, so that the central computing unit may acquire data information under the number of functional domains, thereby enabling more intelligent control of the vehicle.

In an implementation of the present disclosure, the foregoing number of functional domains are all functional domains of the vehicle, that is, all functional domains of the vehicle are fused across domains to the central computing unit for execution, to further reduce costs of electronic devices of the vehicle.

In an implementation of the present disclosure, the number of chips are chips with different structures. Therefore, cross-domain fusion in the present disclosure may also be understood as cross-domain fusion of the vehicle implemented through heterogeneous chips.

For ease of description, in the present disclosure, an example in which the number of chips are a microcontroller unit (MCU), a system on chip (SOC), and a field programmable gate array (FPGA) is mainly used for description. However, structures of the number of chips are not limited.

In an implementation of the present disclosure, after different functional domains of the vehicle are fused to the central computing unit across domains, the present disclosure further improves a communication manner of the central computing unit relative to an existing communication manner between domain controllers. The communication manner includes a communication manner between an external device and other hardware and a communication manner between internal chips.

The following describes a communication manner of the central processing unit in the present disclosure in detail with reference to the accompanying drawings.

For example, when internal chips (that is, the foregoing number of chips) of the central computing unit communicate with each other, different chips use different buses to communicate with each other.

Specifically, as shown in FIG. 2, the MCU communicates with the SOC through an Ether (ETH) bus, that is, the MCU communicates with the SOC through an Ethernet; the SOC communicates with the FPGA through a peripheral component interconnect express (PCIE) bus, that is, the SOC communicates with the FPGA through the PCIE; and the MCU communicates with the FPGA through a serial peripheral interface (SPI) bus, that is, the MCU communicates with the FPGA through the SPI.

It is to be understood that, there is a large amount of data information and signaling (different transmission formats) interaction between the MCU and the SOC. For example, the MCU sends some columns of control instructions to the SOC to adjust angles and directions of cameras, or the like. In another example, the SOC transmits data collected by some columns of sensors to the MCU. Therefore, the MCU communicates with the SOC by using the Ethernet, to ensure transmission of a high bandwidth, and meet a transmission requirement of high data volume and bandwidth. In addition, the Ethernet communication supports transmission of information in various data formats. A large amount of image and/or video data is transmitted between the SOC and the FPGA. Therefore, the SOC communicates with the FPGA through the PCIE bus to meet a transmission requirement of a video signal between the SOC and the FPGA. The MCU communicates with the FPGA through an SPI bus. Because the SPI is a simple and efficient serial communication manner, when a system starts up, the MCU may send a start-up instruction to the FPGA through the SPI bus, so that the FPGA can be quickly started and initialized, and the FPGA can be used to perform fast content display, for example, fast display of an in-vehicle interface.

For example, when the central computing unit performs external communication, the central computing unit communicates with other hardware on the vehicle through a number of types of buses.

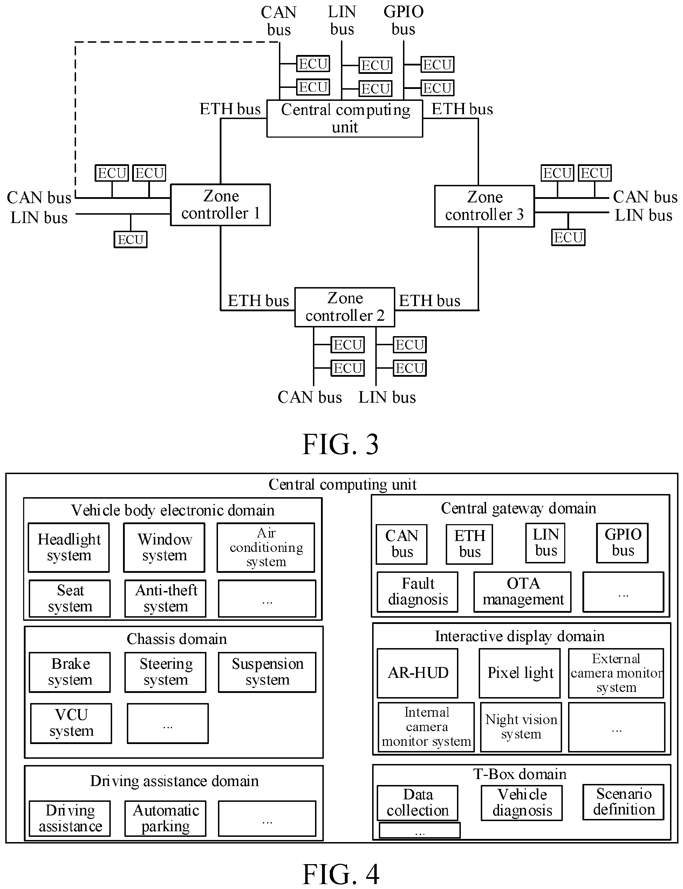

For example, as shown in FIG. 3, the number of types of buses include one or more of the following: an Ether (ETH) bus, a general purpose input/output (GPIO) bus, a local interconnect network (LIN) bus, or a controller area network (CAN) bus. For the CAN bus, an example in which the CAN bus is a CAN FD bus is mainly used for description in the present disclosure.

Optionally, as shown in FIG. 3, when the other hardware is a zone controller of the vehicle, the central computing unit communicates, through the ETH bus, with the zone controller of the vehicle through an Ethernet, and the Ethernet between the central computing unit and the zone controller forms an Ethernet ring network. The zone controller includes a zone controller 1, a zone controller 2, and a zone controller 3, that is, a left zone controller, a rear zone controller, and a right zone controller of the vehicle.

Optionally, when the central computing unit communicates with the zone controller of the vehicle through the Ethernet, the Ethernet ring network between the computing unit and the zone controller uses a time sensitive network (TSN) protocol cluster, to ensure synchronization and reliability of signal time between the central computing unit and the zone controller.

Optionally, as shown in FIG. 3, when the other hardware is an electronic control unit (ECU) of the vehicle (it may alternatively be another system of the vehicle, or a subsystem of the vehicle), the central computing unit communicates with the electronic control unit through the GPIO bus, the local interconnect network (LIN) bus, or the controller area network (CAN) bus. In other words, the central computing unit has a number of types of communication interfaces. The central computing unit is mounted on the number of buses through the number of types of communication interfaces, so that the central computing unit can communicate through the number of buses. For ease of description, in the present disclosure, that the central computing unit is mounted on the number of types of buses is simply described as that the central computing unit includes the number of types of buses.

Further, there may be a number of communication interfaces of each type. For example, for the ETH bus, the central computing unit may have a number of communication interfaces corresponding to the ETH bus. In this way, the central computing unit can be mounted on the number of ETH buses. Then, the central computing unit can communicate with other hardware device through different ETH buses. For example, FIG. 3 shows that the central computing unit may respectively communicate with the zone controller 1 and the zone controller 2 through two ETH buses. It should be noted that, for an ETH bus used by the central computing unit for communication, the central computing unit may switch between the ETH buses through an ETH SWITCH.

Some of the number of ETH buses of the central computing unit may be reserved to facilitate subsequent function expansion.

Compared with existing cross-domain fusion, the domain controllers all communicate and transmit data through a gateway. In the present disclosure, the number types of buses are designed for the central computing unit, so that the central computing unit can communicate with other hardware in a number of communication manners. In this way, when the central computing unit needs to transmit system signals with non-high timeliness, the system signals may be transmitted by using an Ether main bus, thereby fully utilizing an advantage of the high bandwidth of the Ethernet to transmit a large number of system signals. System signals with high requirements for timeliness may be communicated through the CAN bus. In addition, since most system signals do not have such high requirements for timeliness, most system signals may be put on the Ethernet for transmission, and the CAN bus is dedicated to communication of system signals with high timeliness. This greatly reduces the load on the CAN bus. Therefore, a transmission cycle of a signal on the CAN bus can be shortened, and a communication rate of the CAN bus can be increased.

Optionally, in the present disclosure, the CAN bus may be a CAN FD bus, and the two may not be distinguished essentially.

Therefore, a bus on which each electronic control unit (ECU) is mounted may be determined based on a transmission requirement required by the electronic control unit. For example, for a headlight system, when a timeliness requirement is not very high and data transmission is relatively simple, the headlight system may be mounted on the GPIO bus. However, due to a high timeliness requirement for a brake system, the headlight system needs to be mounted on the CAN bus, thereby ensuring the timeliness of the brake system.

Further, which electronic control units on the vehicle need to be mounted on the bus included in the central computing unit may be determined based on a distance between the ECU and the central computing unit, that is, the electronic control unit is mounted on a central computing unit or a zone controller closest to the electronic control unit.

Further, to enable the central computing unit to directly control, through the CAN bus, the electronic control unit mounted on the CAN bus of the zone controller, the CAN bus of the central computing unit is connected to the CAN bus of the zone controller in a ring network. In this way, when the central computing unit needs to control the ECU mounted on the zone controller for communication, the central computing unit may directly communicate with the electronic control unit through the CAN bus of the ring network. As shown in FIG. 3, the CAN bus of the central computing unit is connected to the CAN bus of the zone controller 1 in a ring network. In this way, when the central computing unit needs to control the electronic control unit on the CAN bus of the zone controller 1, the central computing unit directly controls the electronic control unit through the CAN bus, to further improve timeliness of control of the electronic control unit. For example, when the electronic control unit mounted on the CAN bus of the zone controller 1 is the brake system in a left zone, the central control unit may directly control the brake system through the CAN bus, so that the vehicle can be braked in a timely and effective manner.

In an implementation of the present disclosure, each chip further includes a preset interface. In this case, status detection may be performed between the number of chips through the preset interface. To be specific, the MCU may detect, through the preset interface, whether working statuses of the SOC and the FPGA are abnormal. The SOC may also detect, through the preset interface, whether the working statuses of the MCU and the FPGA are abnormal. The FPGA may also detect, through the preset interface, whether the working statuses of the MCU and the SOC are abnormal. The preset interface includes an integrated circuit bus (I2C) interface and/or an input/output (IO) interface.

The following describes, with reference to the accompanying drawings, functional domains of a vehicle involved in the present disclosure and functions of the functional domains.

As shown in FIG. 4, the number of functional domains of the vehicle involved in the present disclosure include a vehicle body electronic domain, a central gateway domain, a chassis domain, an interactive display domain, a driving assistance domain, and a telematics box (T-BOX) domain.

For example, as shown in FIG. 4, a function of the vehicle body electronic domain includes at least one of the following: control of a light system, a window system, an air conditioning system, a seat system, or an anti-theft system. The control of the light system mainly refers to the control of lights in a vehicle to be turned on or off, the adjustment of the brightness of vehicle lights, the adjustment of the color and brightness of atmosphere lights, or the like. The control of the window system is mainly to control closing and opening of a window, or the like. The control of the seat system is mainly to adjust a height and a position of a seat, or the like. The air conditioning system is mainly to adjust a temperature of an air conditioner of a vehicle. It can be understood that, the central control unit executes the function of the vehicle body electronic domain, so that control and adjustment of the light system, the window system, the air conditioning system, the seat system, and the anti-theft system of the vehicle is more intelligent.

Optionally, a function of the central gateway domain includes at least one of the following: communication, fault diagnosis, over-the-air (OTA) management, or network management are performed through various types of buses. The various types of buses include the CAN bus, the ETH bus, the LIN bus, the GPIO bus, and the like. The over-the-air (OTA) management mainly involves the MCU as a gateway to determine whether to start an OTA technology to update software and hardware of the vehicle. The network management mainly involves communication management between the central computing unit and other hardware of the vehicle. The fault diagnosis mainly involves diagnosis of networks of the central computing unit.

Optionally, a function of the chassis domain includes at least one of the following: control of a brake system, a steering system, a suspension system, or a vehicle control unit (VCU) system.

Optionally, a function of the interactive display domain includes at least one of the following: display of an AR-HUD, a pixel light, an internal camera monitor system, an external camera monitor system, or a night vision system.

Optionally, a function of the driving assistance domain includes at least one of the following: driving assistance or automatic parking.

Optionally, a function of the T-BOX domain includes at least one of the following: data collection, vehicle diagnosis, or scenario customization.

Specifically, the MCU communicates with other hardware of the vehicle through the number of types of buses, to execute the function of the vehicle body electronic domain and the function of the chassis domain; and the SOC and the FPGA communicate with cameras through a SERDES bus, to acquire image data from the cameras, and process and/or store the image data, to execute the function of the driving assistance domain, the function of the interactive display domain, and the function of the T-BOX domain.

The following describes features of functions of functional domains and chips that execute the functions of the functional domains in detail.

For example, for the vehicle body electronic domain, there are a large number of control systems in the functional domain. Most systems use the general purpose input/output (GPIO) bus for communication. In addition, many systems (for example, the light system and the window system) in the vehicle body electronic domain are enabled through high-side driver (HSD) or low-side driver (LSD). For example, the window system may be enabled through the low-side driver. In addition, control of many systems in the vehicle body electronic domain requires ADC sampling to enable the systems. For example, for the light system, an analog signal collected by a light sensor may be acquired, and then ADC sampling is performed on the analog signal to acquire an ambient light intensity, thereby determining whether to turn on the light system of the vehicle. For example, ADC sampling may be further performed on the analog signal collected by a raindrop sensor, to determine whether to turn on fog lights or automatically switch high and low beam lights. Therefore, the function of the vehicle body electronic domain requires less computing power, has high control timeliness, and has a large number of GPIO interfaces. In this way, the function of the vehicle body electronic domain is executed by the MCU chip.

Specifically, when the MCU executes the function of the vehicle body electronic domain, the MCU communicates with hardware (a subsystem) under the vehicle body electronic domain through a corresponding bus (generally, a GPIO bus). Therefore, when the MCU acquires data information (which may also be understood as a control instruction) corresponding to the vehicle body electronic domain, the data information may be sent to a corresponding subsystem through a corresponding bus, so that the subsystem executes a function corresponding to the data information, that is, executes the function of the vehicle body electronic domain. For example, the data information is a headlight off instruction. Because the headlight system is mounted on the GPIO bus of the central computing unit, the MCU may send the headlight off instruction to the headlight system through the GPIO bus, and the headlight system turns off a headlight based on the headlight off instruction.

Certainly, when the MCU executes the function of the vehicle body electronic domain, if participation of the SOC is required, for example, data needs to be stored or cached, the MCU interacts with the SOC through the ETH bus to jointly execute the function of the vehicle body electronic domain.

For example, for the function of the central gateway domain, since communication interfaces of various types of buses of the central computing unit are arranged on the MCU, that is, the central computing unit communicates with other hardware of the vehicle through the MCU, the function of the central gateway domain is executed by the MCU.

Specifically, when the central computing unit needs to communicate with other hardware, the MCU determines which bus is currently required, and the MCU controls to communicate with the other hardware through the bus. For example, when the MCU needs to communicate with the zone controller, an ETH bus corresponding to the zone controller is switched to through the ETH SWITCH, and the MCU communicates with the zone controller through the ETH bus. For another example, when the MCU determines that it is necessary to communicate with the headlight system, the MCU communicates with the headlight system through the GPIO bus.

Similarly, if the MCU needs the participation of the SOC when executing the function of the central gateway domain, the MCU interacts with the SOC through the ETH bus to jointly execute the function of the central gateway domain.

For example, for the chassis domain, a security requirement under the functional domain is relatively high, so that a timeliness requirement is also relatively high. However, the computational complexity is not particularly high. In addition, the CAN bus of the central computing unit is directly connected to the MCU. Therefore, to meet the security and timeliness requirements, the function of the chassis domain may be executed by the MCU.

Specifically, when the MCU executes the function of the chassis domain, the MCU communicates with hardware (a subsystem) under the chassis domain through a corresponding bus. After acquiring data information under the chassis domain, the MCU may send the data information to subsystems under the chassis domain through a corresponding bus (generally, a CAN bus), to execute the function of the chassis domain. For example, when the data information acquired by the central computing unit includes a brake instruction, the MCU sends the brake instruction to the brake system through the CAN bus, and the brake system brakes the vehicle in response to the brake instruction.

In addition, for a high security requirement on the chassis domain, when executing the function of the chassis domain, the MCU may further send data information to a system under the chassis domain through at least two buses, to execute the function of the chassis domain. The data information is transmitted through dual buses, so that the data information transmission may be backed up, thereby enabling the function of the chassis domain to be successfully executed.

The at least two buses may be the ETH bus and the CAN bus.

For example, for the interactive display domain, the function of the functional domain mainly involves interaction with a user to display an image. Therefore, a certain CPU capability and AI computing power are required to execute the function of the functional domain, and the function of the functional domain needs to display quickly, which has a high requirement on the timeliness of image data transmission. Therefore, the function of the interactive display domain may be jointly executed by the SOC and the FPGA.

In addition, to execute the function of the interactive display domain, the SOC and FPGA need to be connected to cameras, that is, to acquire image data from the cameras and process the image data, so as to execute the function of the interactive display domain.

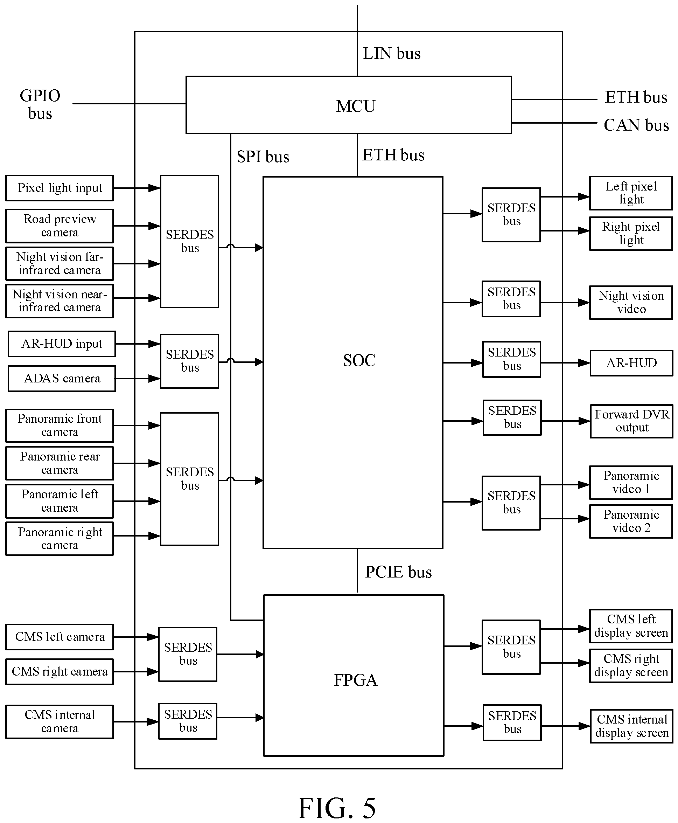

For example, as shown in FIG. 5, for display of AR-HUD, the SOC is connected to an input interface of the AR-HUD through a serializer (SERDES) bus, so that the SOC can acquire to-be-displayed content (that is, the foregoing data information) from the input interface, then render the to-be-displayed content into a format supported by the AR-HUD, and finally, the SOC projects the rendered content to a corresponding region through the SERDES bus for AR-HUD display, to execute the AR-HUD display under the interactive display domain.

For example, as shown in FIG. 5, for display of a pixel light, the SOC is connected to an input interface of the pixel light through the SERDES bus, so that the SOC can acquire to-be-displayed content (that is, the foregoing data information) from the input interface, then segment and render the to-be-displayed content into content required by the pixel light, and send the rendered content to the pixel light through the SERDES bus for display. More specifically, pixel lights of the vehicle include a left pixel light and a right pixel light. In this case, content that needs to be displayed by the left pixel light and the right pixel light may be rendered, and then the content that needs to be displayed by pixels are sent to the left pixel light and the right pixel light through the SERDES bus for display.

For example, as shown in FIG. 5, for display of an internal camera monitor system (CMS), the FPGA is connected to a CMS internal camera through the SERDES bus. In this case, the FPGA may acquire image data (that is, the foregoing data information) from the CMS internal camera, and then process the image data. Certainly, the image data may alternatively be sent to the SOC through the PCIE bus for processing, and then the processed image data is acquired from the SOC. Finally, the FPGA sends the processed image data to a display screen in the CMS through the SERDES bus for display.

For example, as shown in FIG. 5, for display of an external camera monitor system (CMS), the FPGAis respectively connected to a CMS left camera and a CMS right camera of the vehicle through the SERDES bus. In this way, the FPGA respectively acquires image data (that is, the foregoing data information) from the CMS left camera and the CMS right camera through the SERDES bus, and then processes the image data. Certainly, the image data may alternatively be sent to the SOC through the PCIE bus for processing, and then the processed image data is acquired from the SOC. Finally, the FPGA respectively sends the processed image data to a CMS left display screen and a CMS right display screen for display through the SERDES bus.

For example, for display of the night vision system, the SOC is respectively connected to a far-infrared camera and a near-infrared camera of the vehicle through the SERDES bus. In this way, the SOC respectively acquires image data (that is, the foregoing data information) from a night vision far-infrared camera and a night vision near-infrared camera through the SERDES bus, and then processes the image data to obtain a night vision video. Finally, the SOC outputs, through the SERDES bus, the night vision video for display, for example, outputs to an in-vehicle display screen for display.

For example, for the driving assistance domain, an image captured by the camera is mainly used to assist driving of the vehicle. Therefore, the functional domain requires a greater CPU capability and AI computing power. Therefore, the function under the driving assistance domain is executed by the SOC. It should be noted that, because the SOC needs to acquire the image when executing the function of the driving assistance domain, the SOC is connected to the cameras through the serializer SERDES bus, and acquires image data from the cameras to execute the function of driving assistance domain.

Specifically, as shown in FIG. 5, a driving assistance function under the driving assistance domain may further include ADAS, road preview, and panoramic video acquisition.

For example, for an advanced assisted driving system (ADAS), the SOC is connected to an ADAS camera (lidar) through the SERDES bus. In this case, the SOC may acquire image data from the ADAS camera, and then the SOC implements advanced assisted driving on the image data.

For example, for the road preview, if the SOC is connected to a road preview camera through the SERDES bus, corresponding image data may be acquired from the road preview camera, and then the SCO analyzes and processes the image data to implement the road preview.

For example, for a panoramic video, the SOC is respectively connected to a panoramic front camera, a panoramic rear camera, a panoramic left camera, and a panoramic right camera through the SERDES bus. In this case, the SOC may respectively acquire front image data, rear image data, left image data, and right image data of the vehicle from the panoramic front camera, the panoramic rear camera, the panoramic left camera, and the panoramic right camera. Then, the SOC analyzes and processes (for example, splices) the front image data, the rear image data, the left image data, and the right image data, so that a front panoramic video (a panoramic video 1) and a rear panoramic video (namely, a panoramic video 2) may be acquired. Compared with an existing functional domain, if the rear panoramic video is acquired, image data can only be acquired through the panoramic rear camera. However, a rear zone controller cannot acquire left image data and right image data captured by the panoramic left camera and the panoramic right camera. The left image data and the right image data are respectively stored in a left zone controller and a right zone controller, and the two zones are not fused. Therefore, the rear panoramic video with an ultra-wide view angle cannot be acquired. However, in the present disclosure, because cross-domain fusion is implemented, the rear panoramic video with the ultra-wide view angle can be acquired.

Finally, for the T-BOX domain, implementation of the function of the functional domain requires a storage resource, an edge computing capability, and a service oriented architecture (SOA). Therefore, the function of the T-BOX domain is executed by the SOC.

For example, for data collection, the SOC may be connected to sensors through the bus, and then data of the vehicle is acquired through the sensors to implement data collection. Alternatively, the SOC may acquire input data through the input interface, to implement data collection. For vehicle diagnosis, the SOC may diagnose the vehicle through collected data and determine whether there is a malfunction of the vehicle. For scenario customization, the SOC may support the user to customize a scenario and provide an atomized service for the user.

For example, the SOC may store image data acquired from the camera, for example, may store the image data in a digital video recorder (DVR), and perform forward DVR output.

The functions executed by the chips are described above from upper-layer features of the chips and features of the functions. The following describes, with reference to the accompanying drawings, how the chips execute the functions from under-layer features of the chips.

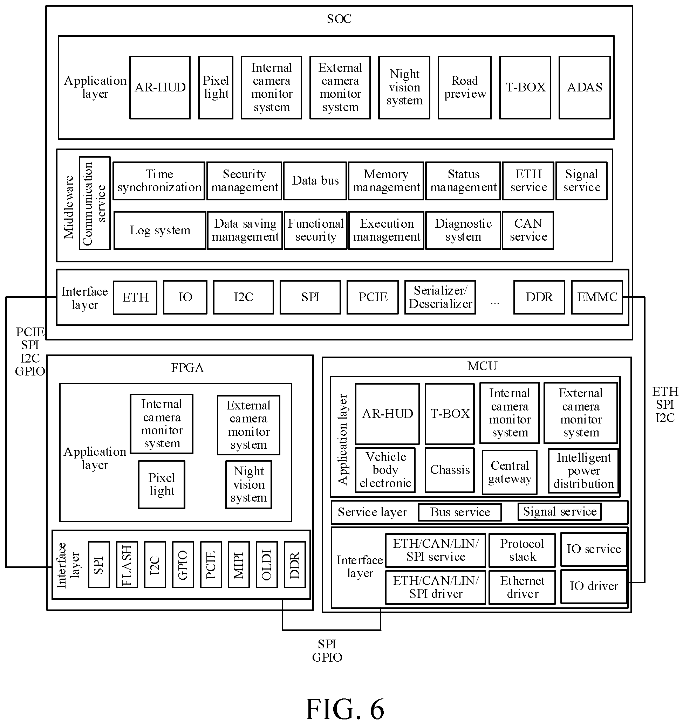

For example, as shown in FIG. 6, the SOC includes an application layer, middleware, and an interface layer. The interface layer mainly provides an underlying driver and hardware for the application layer. Specifically, the interface layer of the SOC includes drivers required for various communication and a memory required for storage. As shown in FIG. 6, the driver includes: a serializer and deserializer driver, an ETH driver, a PCIE driver, an I2C driver, an SPI driver, an IO driver, and the like. The memory includes: an EMMC memory and a DDR memory.

The middleware of the SOC mainly provides communication services for the application layer and the interface layer, and services required by the application layer of the SOC to execute various functions. As shown in FIG. 6, the middleware of the SOC includes: a communication service, time synchronization, security management, a data bus, memory management, status management, an ETH service, a CAN service, a signal service, a log system, data saving management, functional security, execution management, and a diagnostic system.

The application layer of the SOC is mainly configured to implement a function of a corresponding functional domain. For example, the application layer of the SOC may implement the display of the AR-HUD, the display of the pixel light, the display of the internal camera monitor system, the display of the external camera monitor system, the display of the night vision system, road preview, the display of the T-BOX, and the display of the ADAS.

Therefore, the application layer of the SOC may execute the function of the interactive display domain, the function of the driving assistance domain, and the function of the T-BOX domain by invoking a hardware resource of the interface layer and a software resource (service) in the middleware.

Further, as shown in FIG. 6, the FPGA includes an interface layer and an application layer. The interface layer of the FPGA mainly provides an underlying driver and hardware for the application layer. Specifically, the interface layer of the FPGA includes drivers required for various communication and a memory required for storage. As shown in FIG. 6, the driver includes: a FLASH driver, an SPI driver, an I2C driver, a GPIO driver, a PCIE driver, a MIPI driver, and an OLDI driver. The memory is a DDR memory. The functions executed by the application layer include the display of the internal camera monitor system, the display of the external camera monitor system, the display of the pixel light, and the display of the night vision system.

Further, as shown in FIG. 6, the MCU includes an application layer, a service layer, and an interface layer. The interface layer mainly provides an underlying driver and hardware for the application layer. Specifically, the interface layer includes an ETH driver, a CAN driver, a LIN driver, an SPI driver, an Ethernet driver, an IO driver, and an ETH service, a CAN service, a LIN service, an SPI service, an IO service, and a protocol stack. The service layer mainly provides a bus service and a signal service. The functions executed by the application layer include: the display of the AR-HUD, the display of the T-BOX, the display of the internal camera monitor system, the display of the external camera monitor system, vehicle body electronics, a chassis, a central gateway, and intelligent power distribution.

It can be seen that, compared with an existing distributed architecture, different suppliers have different software architectures. A function change range is large, communication costs are high, internal signals and services are not shared in systems, and fusion of function expansion is difficult. In the present disclosure, software and hardware of various chips are deeply decoupled, so that application porting is easy to adapt. The middleware has rich components and meets all system functions. The SOC and the MCU have the same signal service, and functional fusion signal call is easier, and system integration has a congenital advantage.

In an implementation of the present disclosure, the foregoing MCU may be a MCU with a level of ASIL-D, and the SOC may be an SOC of a preset range of Al computing power processing. For example, the preset range is [16, 24].

Advantages of the present disclosure in the following scenarios are described with reference to the cross-domain fusion involved in the present disclosure.

### Scenario 1: Sensing fusion display reuse:

The central processing unit may fuse and reuse the internal and external CMS cameras with the intelligent driving cameras (ADAS cameras), that is, fuse and spice images captured by the internal CMS camera, the external CMS camera (including the CMS left camera and the CMS right camera), and the intelligent driving cameras, so that a panoramic image of an entire surrounding of the vehicle can be obtained. In this way, for each camera system, a sensing range of the camera system can be expanded, and system security and reliability can be improved.

### Scenario 2: Sensing fusion function expansion:

For both the internal CMS camera and the external CMS camera are connected to the SOC, the SOC may acquire images captured by the CMS camera and the external CMS camera. In this way, before the image captured by the internal CMS camera is displayed, the image captured by the internal CMS camera and the image captured by the external CMS camera may be fused and spliced, to form a panoramic rear-field-of-view image, and then the panoramic rear-field-of-view image is respectively displayed to display screens corresponding to the internal CMS camera and the external CMS camera.

### Scenario 3: Sensing improves performance optimization:

During intelligent driving by using an image captured by the ADAS camera in the SOC, the ADAS mainly scans a road in front, and it is difficult to sense a rear field of view. Therefore, when the SOC executes an ADAS function, the image captured by the external CMS camera may be combined, so that a rear arrival vehicle and a pedestrian can be identified in time, sensing accuracy of the ADAS is improved, and detection accuracy of a door opening warning is improved.

### Scenario 4: Sensing fusion reduces sensors:

Because both the road preview camera and the ADSA camera scan a front road to implement road preview and ADAS, the road preview camera and the ADSA camera may share one camera for implementation, and both road preview and ADAS are performed by using an image captured by the camera, thereby reducing a number of cameras.

### Scenario 5: Integration of the brake system and the ADAS:

When the SOC implements ADAS driving through the ADAS camera, if it is determined that brake is required, the SOC may send a brake signal to the MCU, so that the MCU controls the brake system to brake. Because the brake signal is communicated in the central computing unit, time delay is relatively short, thereby enabling more efficient brake.

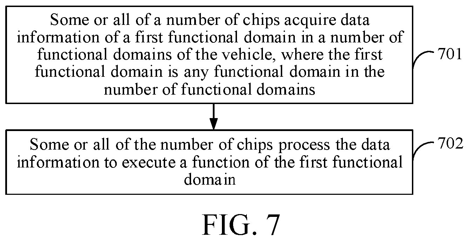

Referring to FIG. 7, FIG. 7 is a schematic flowchart of a function execution method according to an embodiment of the present disclosure. The method uses in the central computing unit described in any one of the foregoing embodiments. The method includes but not limited to the following steps:
701: Some or all of a number of chips acquire data information of a first functional domain in a number of functional domains of the vehicle, where the first functional domain is any functional domain in the number of functional domains.
702: Some or all of the number of chips process the data information to execute a function of the first functional domain.

It should be noted that, for some or all of the number of chips, how to acquire the data information under the functional domain, and how to process the data information, reference may be made to the content in the foregoing embodiments. Details are not described in detail.

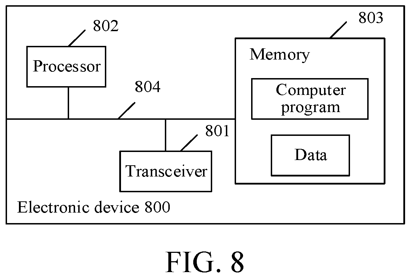

Referring to FIG. 8, FIG. 8 is a schematic structural diagram of an electronic device according to an embodiment of the present disclosure. As shown in FIG. 8, the electronic device 800 includes a transceiver 801, a processor 802, and a memory 803, which are connected to each other through a bus 804. The memory 803 is configured to store a computer program and data, and transmit the data stored in the memory 803 to the processor 802.

The processor 802 is configured to read the computer program in the memory 803 and perform the following operations:
acquiring data information of a first functional domain in a number of functional domains of the vehicle, where the first functional domain is any functional domain in the number of functional domains; and
processing the data information to execute a function of the first functional domain.

For functions of the processor 802, reference may be made to functions of the foregoing chip. Details are not described herein again.

An embodiment of the present disclosure further provides a computer-readable storage medium. The computer-readable storage medium stores a computer program, and the computer program is executed by a processor to implement some or all of the steps of any function execution method described in the foregoing method embodiments.

An embodiment of the present disclosure further provides a computer program product. The computer program product includes a non-transitory computer-readable storage medium storing a computer program. The computer program is operable to cause a computer to execute some or all of the steps of any function execution method described in the foregoing method embodiments.

It should be noted that, for ease of description, the foregoing method embodiments are described as a series of action combinations. However, a person skilled in the art is to learn that the present disclosure is not limited to the described action orders because some steps may be performed in another order or performed at the same time according to the present disclosure. In addition, a person skilled in the art is also to learn that the embodiments described in this specification are all exemplary embodiments, and the involved actions and modules are not necessary for the present disclosure.

In the foregoing embodiments, descriptions of the embodiments have different emphases. As for parts that are not described in detail in an embodiment, reference may be made to related descriptions in other embodiments.

In the several embodiments provided in the present disclosure, it should be understood that the disclosed apparatus may be implemented in other manners. For example, the apparatus embodiment described above is merely a schematic embodiment. For example, the division of units is merely a division of logical functions, and division manners may be used in actual implementation. For example, multiple units or components may be combined or integrated into another system, or some features may be ignored or not performed. In addition, the displayed or discussed mutual couplings or direct couplings or communication connections may be implemented by using some interfaces; indirect couplings or communication connections between apparatuses or units may be electric or in other forms.

The units described as separate parts may or may not be physically separate, and parts displayed as units may or may not be physical units, in other words, may be located at one position, or may be distributed on a number of network units. Some or all of the units may be selected based on actual requirements to achieve the objectives of the solutions of the embodiments.

In addition, functional units in the embodiments of the present disclosure may be integrated into one processing unit, or each of the units may exist alone physically, or two or more units are integrated into one unit. The foregoing integrated unit may be implemented in a form of hardware, or may be implemented in a form of a software program module.

When the integrated unit is implemented in the form of a software program module and sold or used as an independent product, the integrated unit may be stored in a computer-readable memory. Based on such an understanding, the technical solutions of the present disclosure essentially, or the part contributing to the related art, all or some of the technical solutions may be implemented in a form of a software product. The computer software product is stored in a memory, and includes several instructions for instructing a computer device (which may be a personal computer, a server, a network device, or the like) to perform all or some of the steps of the methods in the embodiments of the present disclosure. The foregoing memory includes: any medium that can store program code, such as a USB flash drive, a read-only memory (ROM), a random access memory (RAM), a removable hard disk, a magnetic disk, or an optical disc.

A person of ordinary skill in the art may understand that all or some of the steps of the various methods in the foregoing embodiments may be implemented by a program instructing relevant hardware. The program may be stored in a computer-readable memory. The memory may include: a flash drive, a read-only memory (ROM), a random access memory (RAM), a magnetic disk, an optical disc, or the like.

The embodiments of the present disclosure are described in detail above. The principle and implementations of the present disclosure are described herein through specific examples. The description about the embodiments of the present disclosure is merely provided to help understand the method and core ideas of the present disclosure. Meanwhile, a person of ordinary skill in the art may make modifications to the specific implementations and application scopes according to the ideas of the present disclosure. In conclusion, the content of the specification should not be construed as a limitation to the present disclosure.

## Claims

1. A central computing unit for a vehicle, the central computing unit comprising a plurality of chips; and
some or all of the plurality of chips being configured to acquire data information of a first functional domain of a plurality of functional domains of the vehicle and process the data information to execute a function of the first functional domain, the first functional domain being any functional domain in the plurality of functional domains.

2. A function execution method for a central computing unit of a vehicle, the central computing unit comprising a plurality of chips; and the method comprising:
acquiring, by some or all of the plurality of chips, data information of a first functional domain of a plurality of functional domains of the vehicle, and processing the data information to execute a function of the first functional domain, the first functional domain being any functional domain in the plurality of functional domains.

3. The computing unit according to claim 1 or the method according to claim 2, wherein
the plurality of functional domains are all functional domains of the vehicle.

4. The computing unit according to claim 1 or the method according to claim 2, wherein the plurality of chips have different structures.

5. The computing unit according to claim 1 or the method according to claim 2, wherein
communicating, by the central computing unit, with other hardware on the vehicle through a plurality of types of buses.

6. The computing unit or the method according to claim 5, wherein
the plurality of types of buses comprise one or more of the following: an ether ETH bus, a general purpose input/output (GPIO) bus, a local interconnect network (LIN) bus, and a controller area network (CAN) bus.

7. The computing unit or the method according to claim 6, wherein
when the other hardware is a zone controller of the vehicle, the central computing unit communicates, through the ETH bus, with the zone controller of the vehicle through an Ethernet ring network; and
when the other hardware is an electronic control unit of the vehicle, the central computing unit communicates with the electronic control unit through the GPIO bus, the local interconnect network (LIN) bus, or the controller area network (CAN) bus.

8. The computing unit according to claim 1 or the method according to claim 2, wherein
status detection is performed between the plurality of chips through a preset interface, wherein the preset interface comprises an integrated circuit bus (I2C) interface and/or an input/output (IO) interface.

9. The computing unit according to claim 1 or the method according to claim 2, wherein
the plurality of chips comprise a microcontroller unit (MCU), a system on chip (SOC), and a field programmable gate array (FPGA).

10. The computing unit or the method according to claim 9, wherein
the MCU communicates with the SOC through an ether ETH bus;
the SOC communicates with the FPGA through a high-speed serial computer expansion PCIE (peripheral component interconnect express) bus; and
the MCU communicates with the FPGA through a serial peripheral interface (SPI) bus.

11. The computing unit according to claim 1 or the method according to claim 2, wherein
the plurality of functional domains comprise at least one of the following: a vehicle body electronic domain, a central gateway domain, a chassis domain, an interactive display domain, a driving assistance domain, or a telematics box (T-BOX) domain.

12. The computing unit or the method according to claim 11, wherein
a function of the vehicle body electronic domain comprises at least one of the following: control of a light system, a window system, an air conditioning system, a seat system, or an anti-theft system;
a function of the central gateway domain comprises at least one of the following: performing communication, fault diagnosis, over-the-air (OTA) management, or network management through various types of buses;
a function of the chassis domain comprises at least one of the following: control of a brake system, a steering system, a suspension system, or a vehicle control unit (VCU) system;
a function of the interactive display domain comprises at least one of the following: display of an AR-HUD, a pixel light, an internal camera monitor system, an external camera monitor system, or a night vision system;
a function of the driving assistance domain comprises at least one of the following: driving assistance or automatic parking; and
a function of the T-BOX domain comprises at least one of the following: data collection, vehicle diagnosis, or scenario customization,
preferably wherein
the function of the vehicle body electronic domain, the function of the central gateway domain, and the function of the chassis domain are executed by the MCU;
the function of the interactive display domain is jointly executed by the SOC and the FPGA; and
the function of the driving assistance domain and the function of the T-BOX domain are executed by the SOC,
more preferably wherein
the MCU communicates with other hardware of the vehicle through a plurality of types of buses, to execute the function of the vehicle body electronic domain, the function of the chassis domain, and the function of the central gateway domain; and
the SOC and the FPGA communicate with cameras through a serializer SERDES bus, to acquire image data from the cameras, and process the image data, to execute the function of the driving assistance domain, the function of the interactive display domain, and the function of the T-BOX domain.

13. An electronic device, comprising: a processor and a memory, the processor being connected to the memory, the memory being configured to store a computer program, and the processor being configured to execute the computer program stored in the memory, to cause the electronic device to perform the method according to claim 2.

14. A computer-readable storage medium, the computer-readable storage medium storing a computer program, and the computer program being executed by a processor to implement the method according to claim 2.

15. A vehicle, comprising the central computing unit according to any one of claims 1 to 12.
